(19) Europäisches Patentamt
European Patent Office
Office européen des brevets

(11) EP 2 787 419 A1

(12) EUROPEAN PATENT APPLICATION

(43) Date of publication:
08.10.2014 Bulletin 2014/41

(51) Int Cl.:
*G06F 3/042* (2006.01)

(21) Application number: 14162046.8

(22) Date of filing: 27.03.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 03.04.2013 JP 2013077909

(71) Applicant: Funai Electric Co., Ltd.
Daito-shi,
Osaka 574-0013 (JP)

(72) Inventors:
• Izukawa, Shintaro
  Daito-shi, Osaka 574-0013 (JP)
• Nishioka, Ken
  Daito-shi, Osaka 574-0013 (JP)
• Chikaoka, Atsuhiko
  Daito-shi, Osaka 574-0013 (JP)

(74) Representative: Global IP Europe
Patentanwaltskanzlei
Pfarrstraße 14
80538 München (DE)

(54) **Input device and input method**

(57) An input device includes a light source, a laser beam scanner, a photodetector, and an inclination determination component. The light source is configured to emit a laser beam. The laser beam scanner is configured to scan a plurality of lines of the laser beam in a line scanning direction. The lines of the laser beam are projected in a projection region of a projection surface. The photodetector is configured to detect a reflected light of the laser beam reflected by an object located above the projection region. The inclination determination component is configured to determine an inclination of the object with respect to the projection surface in the line scanning direction based on a change amount in a timing at which the photodetector detects the reflected light.

FIG. 1

EP 2 787 419 A1

**Description**

CROSS-REFERENCE TO RELATED APPLICATIONS

This application claims priority to Japanese Patent Application No. 2013-077909 filed on April 3, 2013. The entire disclosure of Japanese Patent Application No. 2013-077909 is hereby incorporated herein by reference.

BACKGROUND

Field of the Invention

The present invention generally relates to an input device and an input method. Background Information
An input device is well-known that makes use of a VUI (virtual user interface) (see Japanese Unexamined Patent Application Publication No. 2009-258569 (Patent Literature 1), for example). This VUI is a virtual input interface that allows the user to perform input operations on a projected image.
For example, this Patent Literature 1 discloses an electronic device having a projector module that projects an image onto an installation surface of an electronic device, and a photodiode. A scanned laser beam is projected from the projector module onto the installation surface. This scanned laser beam is reflected by an object, such as the user's finger, located above the installation surface. This reflected light is detected by the photodiode, which allows the position of the object with respect to the projected image to be detected.

SUMMARY

It has been discovered that with a conventional input device utilizing a VUI, the inclination of the object with respect to the projection surface of the projected image can not be detected. For example, the above-mentioned Patent Literature 1 is silent about the method for detecting the inclination of an object.
One aspect is to provide an input device and an input method with which a virtual input interface can be realized, allowing an inclination of an object located above a projection region in a line scanning direction of a laser beam to be detected.
In view of the state of the known technology, an input device is provided that includes a light source, a laser beam scanner, a photodetector, and an inclination determination component. The light source is configured to emit a laser beam. The laser beam scanner is configured to scan a plurality of lines of the laser beam in a line scanning direction. The lines of the laser beam are projected in a projection region of a projection surface. The photodetector is configured to detect a reflected light of the laser beam reflected by an object located above the projection region. The inclination determination component is configured to determine an inclination of the object with respect to the projection surface in the line scanning direction based on a change amount in a timing at which the photodetector detects the reflected light.
Also other objects, features, aspects and advantages of the present disclosure will become apparent to those skilled in the art from the following detailed description, which, taken in conjunction with the annexed drawings, discloses one embodiment of the input device and the input method.

BRIEF DESCRIPTION OF THE DRAWINGS

Referring now to the attached drawings which form a part of this original disclosure:

FIG. 1 is a perspective view of a projector in accordance with one embodiment;
FIG. 2 is a block diagram of the configuration of the projector;
FIG. 3 is a plan view illustrating a scanning state of a scanned laser beam of the projector;
FIG. 4A is a perspective view of a situation in which the scanned laser beam is reflected by an object inclined in a line scanning direction;
FIG. 4B is a y direction view of the object inclined in the line scanning direction;
FIG. 4C is a x direction view of the object inclined in the line scanning direction;
FIG. 5 is a graph of a light detection signal of a photodetector that detects reflected light from the object inclined in the line scanning direction;
FIG. 6A is a perspective view of a situation in which the scanned laser beam is reflected by a perpendicular object;
FIG. 6B is a y direction view of the perpendicular object;
FIG. 6C is a x direction view of the perpendicular object;
FIG. 7 is a graph of a light detection signal of the photodetector that detects reflected light from the perpendicular object;

FIG. 8A is a diagram of an example of applying a method for determining an inclination of the object to flick input; and

FIG. 8B is a diagram of an example of applying a method for determining the inclination of the object to joystick input.

DETAILED DESCRIPTION OF EMBODIMENTS

A selected embodiment will now be explained with reference to the drawings. It will be apparent to those skilled in the art from this disclosure that the following descriptions of the embodiment are provided for illustration only and not for the purpose of limiting the invention as defined by the appended claims and their equivalents.

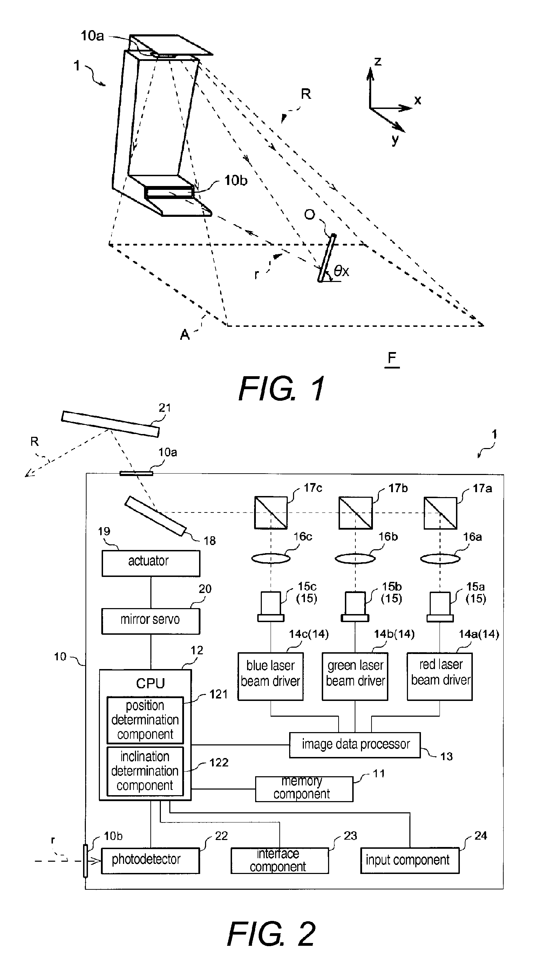

Referring initially to FIG. 1, a projector 1 is illustrated in accordance with a first embodiment. The projector 1 is a laser beam scanning type of projection device having a VUI (Virtual user interface) function. The projector 1 is also an electronic device that can be used as an input device by the VUI function. The VUI is a virtual input interface that allows the user to perform input operations on a projected image, such as an image of a keyboard, etc., that is projected onto a projection surface F.

FIG. 1 is a perspective view of the projector 1. In the following description, a line scanning direction of a scanned laser beam R projected onto the projection surface F is indicated as an "x direction" in FIG. 1 and other figures. A direction perpendicular to the line scanning direction is indicated as a "y direction". The x and y directions are parallel to the projection surface F. The normal direction of the projection surface F is indicated as a "z direction". The x, y, and z directions are all perpendicular to each other.

As shown in FIG. 1, the laser beam scanning type of projector 1 projects onto the projection surface F a plurality of lines of the scanned laser beam R emitted from a light emission face 10a, thereby projecting a specific image (such as a still or moving picture) within a projection region A on the projection surface F.

If there is an object O, such as a touch pen or the user's finger, above the projection region A, then the scanned laser beam R is reflected by this object O. A reflected light r is incident on a light incidence face 10b of the projector 1. The projector 1 detects the relative position of the object O with respect to the projection region A based on the detection result for the reflected light r of the scanned laser beam R reflected by the object O located above the projection region A.

Here, if the object O is inclined in the line scanning direction (the x direction) by $\theta x$ ($0° \leq \theta x < 90°$) with respect to the projection surface F, then the timing at which the scanned laser beam R is reflected by the object O varies according to what number of line the scanned laser beam R is on. For example, as will be discussed below, the timing of reflection by the object O differs between the scanned laser beam Rn of the n-th line (n is a positive integer of 1 or more) and the scanned laser beam Rn+1 of the n+1-th line. Therefore, the timing at which the reflected light r from the object O is incident on the light incidence face 10b of the projector 1, and the detection timing at which the reflected light r is detected both vary according to what number of line the scanned laser beam R for the reflected light r is on. The projector 1 detects the inclination $\theta x$ in the line scanning direction of the object O with respect to the projection surface F based on the deviation (e.g., the amount of change) in the detection timing of the reflected light r from the object O. The method for determining the inclination $\theta x$ of the object O in the line scanning direction will be discussed in detail below.

Next, the configuration of the projector 1 will be described. FIG. 2 is a block diagram of the configuration of the projector 1. As shown in FIG. 2, the projector 1 includes a housing 10, a memory component 11, a CPU 12, an image data processor 13, a laser beam driver 14, a laser diode 15, collimator lenses 16a to 16c, and beam splitters 17a to 17c. The projector 1 further includes a MEMS mirror 18, an actuator 19, a mirror servo 20, a reflecting mirror 21, a photodetector 22, an interface component 23, and an input component 24. In the following description, the "laser diode" will be abbreviated as LD. The laser beam driver 14 includes a red laser beam driver 14a, a green laser beam driver 14b, and a blue laser beam driver 14c. The LD 15 includes a red LD 15a, a green LD 15b, and a blue LD 15c.

The memory component 11 is a nonvolatile memory medium, and holds programs and control information used by the CPU 12 and so forth. The memory component 11 also holds image data about images projected in the projection region A, for example. In FIG. 2, the memory component 11 is configured separately from the CPU 12, but this is just an example, and it can instead be included in the CPU 12.

The CPU 12 is a controller that uses the programs, control information, and so on contained in the memory component 11 to control the various components of the projector 1. This CPU 12 has a position determination component 121 and an inclination determination component 122.

The position determination component 121 determines the relative position of the object O with respect to the projection region A based on the detection result of the photodetector 22. This relative position is calculated based on the result calculated by the photodetector 22 for the reflected light r of the scanned laser beam R reflected by the object O, for example.

The inclination determination component 122 determines the inclination $\theta x$ (see FIG. 1) of the object O with respect to the projection surface F in the line scanning direction (the x direction) of the scanned laser beam R based on the deviation (the amount of change) in the timing at which the reflected light r from the object O is detected by the photodetector 22.

The image data processor 13 converts the image data outputted from the CPU 12 into data for three colors, namely, red (R), green (G), and blue (B). The converted data for three colors is outputted to the laser beam driver 14.

The laser beam driver 14 is a control circuit that performs drive control of the LD 15. The red laser beam driver 14a performs drive control for the emission, light output, and so forth of the red LD 15a. The green laser beam driver 14b performs drive control for the emission, light output, and so forth of the green LD 15b. The blue laser beam driver 14c performs drive control for the emission, light output, and so forth of the blue LD 15c.

The LD 15 is a light source that emits a laser beam with a wavelength in the visible light band. The red LD 15a is a light emitting element that emits a red laser beam. The green LD 15b is a light emitting element that emits a green laser beam. The blue LD 15c is a light emitting element that emits a blue laser beam.

The MEMS mirror 18 is an optical reflection element that reflects the laser beams emitted from the LD 15 and incident via the collimator lenses 16a to 16c and the beam splitters 17a to 17c. The actuator 19 drives the MEMS mirror 18 and varies the reflection direction of the laser beams in biaxial directions. The mirror servo 20 is a drive controller that controls the drive of the MEMS mirror 18 by the actuator 19 based on a control signal inputted from the CPU 12. The MEMS mirror 18, the actuator 19, and the mirror servo 20 are examples of a laser beam scanner that scans a plurality of lines of the scanned laser beam R projected onto the projection surface F.

The reflecting mirror 21 is a laser beam reflector provided on the outside of the housing 10. The reflecting mirror 21 reflects the scanned laser beam R that goes through the light emission face 10a formed on the housing 10 and is emitted outside of the housing 10, and guides this light to the projection surface F. The reflecting mirror 21 is movably attached to the housing 10, and can also be removed from the optical path of the scanned laser beam R.

As shown in FIG. 2, the red laser beam emitted from the red LD 15a is converted into parallel light by the collimator lens 16a and reflected by the beam splitter 17a. The reflected red laser beam is transmitted by the beam splitters 17b and 17c and reaches the MEMS mirror 18. The green laser beam emitted from the green LD 15b is converted into parallel light by the collimator lens 16b and reflected by the beam splitter 17b. The reflected green laser beam is transmitted by the beam splitter 17c and reaches the MEMS mirror 18. The blue laser beam emitted from the blue LD 15c is converted into parallel light by the collimator lens 16c, reflected by the beam splitter 17c, and reaches the MEMS mirror 18. The laser beams are reflected as the scanned laser beam R at the MEMS mirror 18 as a result of a change in the reflection direction by the drive of the actuator 19. This scanned laser beam R goes through the light emission face 10a, is reflected by the reflecting mirror 21 outside the housing 10, and is projected onto the projection surface F.

The photodetector 22 includes a light receiving element or the like, and detects light that is incident after passing through the light incidence face 10b formed on the housing 10. The photodetector 22 detects, for example, the reflected light r of the scanned laser beam R reflected by the object O located above the projection region A. The photodetector 22 outputs a light detection signal to the CPU 12 based on this detection result.

The interface component 23 is a communication interface for wired or wireless communication with an external device. The input component 24 is an input unit that accepts user operation input.

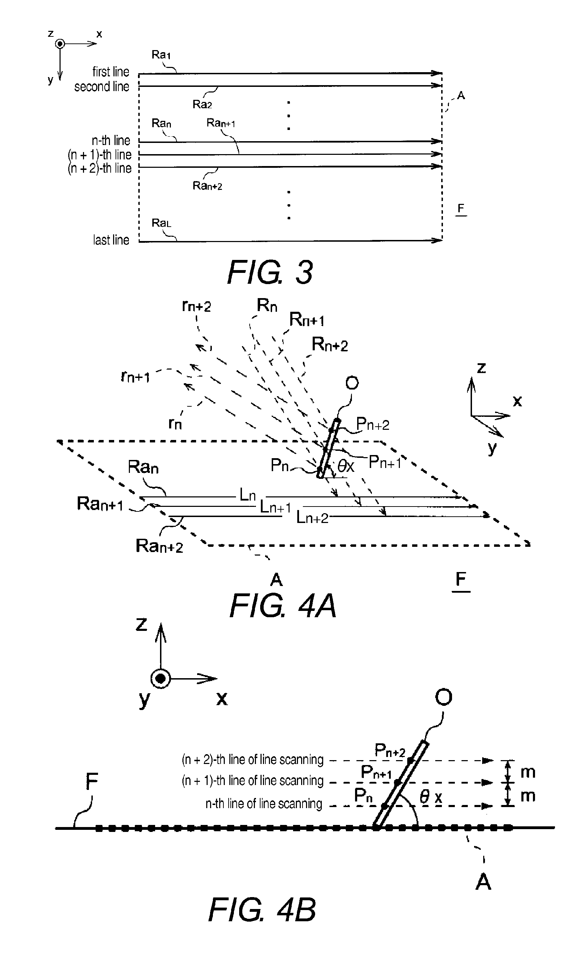

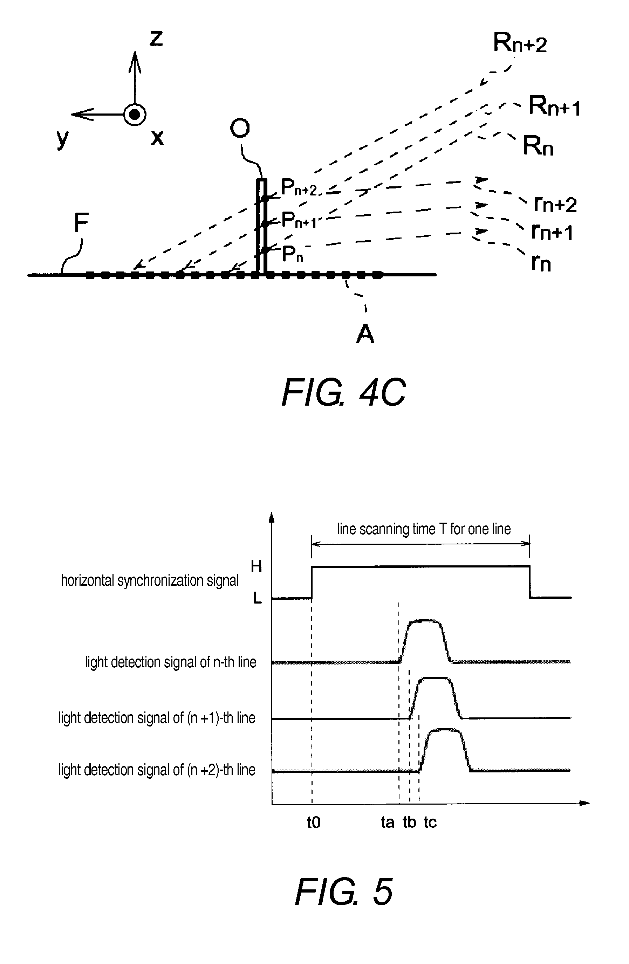

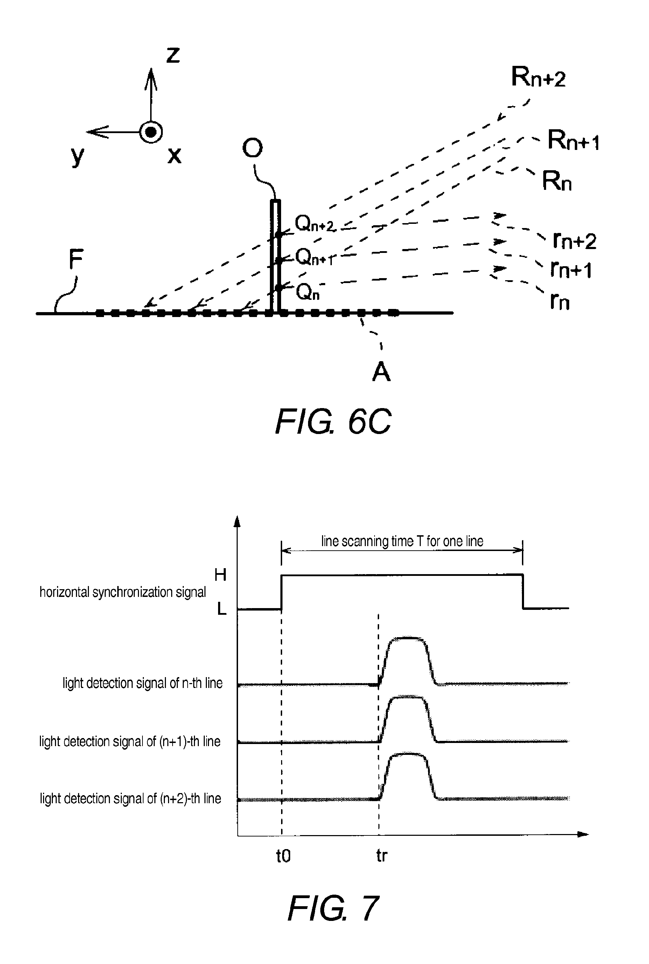

Next, the scanning state of the scanned laser beam R projected in the projection region A will be described. FIG. 3 is a plan view illustrating the scanning state of the scanned laser beam R. As shown in FIG. 3, the scanned laser beam R is line-scanned in the x direction from one edge of the projection region A (the left end in FIG. 3, for example) toward the other edge (the right end in FIG. 3, for example), all at the same line scanning time T (see FIGS. 5 and 7, discussed below). After one line is scanned, one scanning line Ra is projected in the projection region A on the projection surface F. The scanned laser beams R for the various lines are scanned such that they are separated by a specific distance in the y direction, from the edge of the projection region A closer to the projector 1 (the top end in FIG. 3, for example) toward the edge that is farther from the projector 1 (the bottom end in FIG. 3, for example). As shown in FIG. 3, these scanning lines Ra (e.g., the scanning lines Ra1, ..., Ran, Ran+1, Ran+2, ..., RaL) are projected, which forms one frame of projected image in the projection region A.

Next, the method by which the inclination determination component 122 determines the inclination $\theta x$ of the line scanning direction of the object O located above the projection region A will be described.

Referring now to FIGS 4A-4C and 5, we will describe a case when the object O is inclined. Specifically, we will describe a case in which the object O located above the projection region A is inclined by $\theta x$ in the line scanning direction (the x direction) with respect to the projection surface F (that is, when $\theta x$ is not 90°). FIG. 4A is a side view of a situation in which the scanned laser beam R is reflected by the object O inclined in the line scanning direction. FIG. 4B is a side view in the y direction of the object O inclined in the line scanning direction. FIG. 4C is a side view in the x direction of the object O inclined in the line scanning direction. FIG. 5 is a graph of a light detection signal of the photodetector 22 that detects light reflected from the object O inclined in the line scanning direction. In FIG. 5, the horizontal synchronization signal is a control signal outputted from the CPU 12 for the line-scanning of one line of the scanned laser beam R. The time T at which the horizontal synchronization signal is at the high level H indicates the line scanning time for one line of the scanned laser beam R. t0 is the point when the horizontal synchronization signal changes from the low level L to the high level H, and indicates the point when the line scanning of one line of the scanned laser beam R is commenced.

As shown in FIGS. 4A to 4C, the scanned laser beams Rn to Rn+2 for the n-th to (n+2)-th lines (where n is a positive integer of 1 or more) are reflected in the course of this line scanning at the reflection starting points Pn, Pn+1, and Pn+2 of the object O. As shown in FIG. 4B, the reflection starting points Pn, Pn+1, and Pn+2 are separated from each other by a distance m in the z direction. Since the positions of the reflection starting points Pn, Pn+1, and Pn+2 in the x direction are all different, the timing at which light is reflected at the reflection starting points Pn, Pn+1, and Pn+2 is also different. For instance, the timing at which light is reflected at the reflection starting point Pn+1 is later than the timing at which light is reflected at the reflection starting point Pn. Also, the timing at which light is reflected at the reflection starting point Pn+2 is later than the timing at which light is reflected at the reflection starting point Pn+1.

Therefore, as shown in FIG. 5, peaks begin to appear in the light detection signals for the reflected light rn to rn+2 of the n-th to (n+2)-th lines at different time points ta, tb, and tc (relative to the point t0). The peak appearing at the time point ta corresponds to a detection result of the reflected light rn of the scanned laser beam Rn of the n-th line reflected at the reflection starting point Pn of the object O. The peak appearing at the time point tb corresponds to a detection result of the reflected light rn+1 of the scanned laser beam Rn+1 of the (n+1)-th line reflected at the reflection starting point Pn+1 of the object O. The peak appearing at the time point tc corresponds to a detection result of the reflected light rn+2 of the scanned laser beam Rn+2 of the (n+2)-th line reflected at the reflection starting point Pn+2 of the object O. In the illustrated embodiment, the time points ta, tb and tc are measured relative to the time points t0 for the n-th, (n+1)-th and (n+2)-th scanning lines Ran, Ran+1 and Ran+2, respectively.

Specifically, the photodetector 22 detects the reflected light rn+1 for the (n+1)-th line reflected by the object O at a timing that is later by (tb - ta) than the reflected light rn of the n-th line. Also, the photodetector 22 detects the reflected light rn+2 for the (n+2)-th line reflected by the object O at a timing that is later by (tc - tb) than the reflected light rn+1 of the (n+1)-th line.

The inclination determination component 122 determines the inclination θx in the line scanning direction (the x direction) of the object O by using the following Equation 1, based on the deviation (tb - ta) of the detection timing of the light detection signal for the reflected light rn+1 of the (n+1)-th line, for example.

$$\theta x = \tan^{-1}\left[m/\{(L_{n+1}/T) \times (tb - ta)\}\right] \quad (\text{Equation 1})$$

In Equation 1, m is the spacing of the reflection starting points Pn and Pn+1 (the shortest distance in the z direction). $L_{n+1}$ is the line scanning distance of the scanned laser beam Rn+1 for the (n+1)-th line (that is, the projection distance in the x direction). T is the line scanning time for one line of the scanned laser beam R (see FIG. 5). In the illustrated embodiment, the value of the spacing m can be preset based on the spacing between adjacent scanned laser beams (e.g., the scanned laser beams R and R+1, the scanned laser beams R+1 and R+2, and the like).

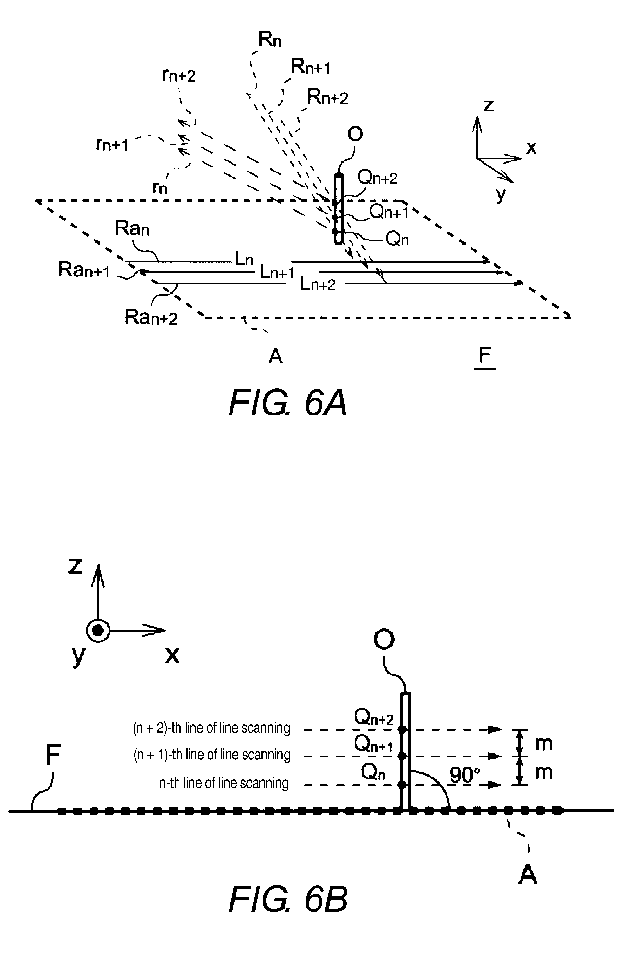

Referring now to FIGS 6A-6C and 7, we will describe a case when the object O is perpendicular. Specifically, we will describe a case in which the object O located above the projection region A is perpendicular to the projection surface F. In this case, the angle θx of the object O in the line scanning direction (the x direction) with respect to the projection surface F is 90°. FIG. 6A is a perspective view of a situation in which the scanned laser beam R is reflected by the perpendicular object O. FIG. 6B is a side view in the y direction of the perpendicular object O. FIG. 6C is a side view in the x direction of the perpendicular object O. FIG. 7 is a graph of a light detection signal of the photodetector 22 that detects reflected light from the perpendicular object O. In FIG. 7, the horizontal synchronization signal is a control signal outputted from the CPU 12 in order to line-scan one line of the scanned laser beam R. The time T at which the horizontal synchronization signal is at the high level indicates the line scanning time for one line of the scanned laser beam R. t0 is the point when the horizontal synchronization signal changes from the low level L to the high level H, and indicates the point when the line scanning of one line of the scanned laser beam R is commenced.

As shown in FIGS. 6A to 6C, the scanned laser beams Rn to Rn+2 for the n-th to (n+2)-th lines (where n is a positive integer of 1 or more) are reflected in the course of this line scanning at the reflection starting points Qn, Qn+1, and Qn+2 of the object O. As shown in FIG. 6B, the reflection starting points Qn, Qn+1, and Qn+2 are separated from each other by a distance m in the z direction. Since the object O is perpendicular to the projection surface F here, the positions of the reflection starting points Qn, Qn+1, and Qn+2 in the x direction are substantially the same. Therefore, the timing at which light is reflected at the reflection starting points Qn, Qn+1, and Qn+2 is also substantially the same.

Thus, as shown in FIG. 7, peaks begin to appear in the light detection signals for the reflected light rn to rn+2 of the n-th to (n+2)-th lines at substantially the same time point tr (relative to the point t0). These peaks correspond to the detection results of the reflected light rn to rn+2 of the scanned laser beams Rn to Rn+2 of the n-th to (n+2)-th lines reflected at the reflection starting points Qn, Qn+1, and Qn+2 of the object O.

In this case, since the deviation (the amount of change) in the detection timing between the various light detection signals is zero, the inclination determination component 122 determines the inclination θx of the object O in the line scanning direction to be 90° based on the above Equation 1.

With the above method for determining the inclination θx the inclination θx is calculated based on the single deviation (the amount of change) in the detection timings. However, the inclination θx can be calculated based on a plurality of deviations between a plurality of detection timings. This allows the inclination $\theta x$ of the object O in the line scanning direction to be calculated more accurately. More specifically, in the illustrated embodiment, the inclination $\theta x$ is calculated based on the single deviation (tb - ta) of the detection timings ta and tb. However, the inclination $\theta x$ can be calculated based on the deviations (e.g., (tb - ta) and (tc - tb)) of the detection timings ta, tb and tc. In this case, the inclination $\theta x$ can be calculated as an average value of the inclinations $\theta x$ calculated based on the deviations (e.g., (tb - ta) and (tc - tb)) using Equation 1, respectively. Of course, when the inclination $\theta x$ is calculated based on the deviation (tc - tb) using Equation 1, m is the spacing of the reflection starting points $Pn+1$ and $Pn+2$ (the shortest distance in the z direction). Also, $L_{n+2}$ indicative of the line scanning distance of the scanned laser beam $Rn+2$ for the (n+2)-th line (that is, the projection distance in the x direction) is used instead of $L_{n+1}$.

Also, with the above method for determining the inclination $\theta x$, the detection timing is found at the points ta to tc (see FIG. 5) and tr (see FIG. 7) at which detection begins for the reflected light rn to rn+2 of the n-th to (n+2)-th lines. However, the present invention is not limited to this example. The detection timing can instead be found at the point when detection ends (the point when the peaks of the various light detection signals disappear in FIGS. 5 and 7). Alternatively, the detection timing can be found at some point from the start until the end of the detection (such as a point in between these).

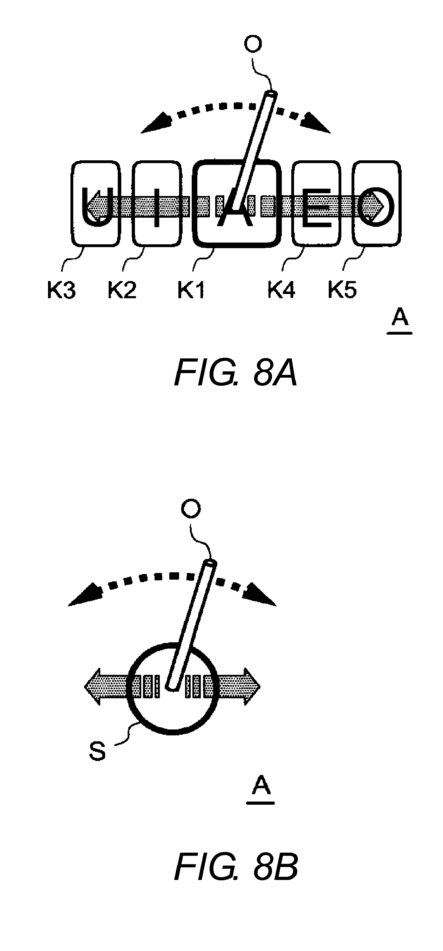

Next, an application example of this embodiment will be described. FIG. 8A is a diagram of an example of applying a method for determining the inclination of the object O to flick input. As shown in FIG. 8A, a projected image K1 indicating a key for inputting the character "A" is projected in the projection region A. For example, a touch pen or other such object O is placed on the projected key K1 indicating "A," and the object O is inclined in the x direction (the left or right direction in FIG. 8A). As a result, projected keys K2 and K3 indicating the characters "I" and "U" are newly projected on the left side of the projected key K1 indicating the character "A," and projected keys K4 and K5 indicating the characters "E" and "O" are newly projected on the right side.

In this state, if the user moves the object O over the projected key to be inputted (such as the projected key K2, then the character indicated by that projected key (such as the character "I") is selected and inputted, for example. Alternatively, in a state in which the projected keys K2 to K5 have been newly displayed, the projected key can be selected according to the inclination direction of the object O or the magnitude of the inclination $\theta x$. If the touch pen is removed from the projection region A without moving the object O, the projected key K1 indicating the character "A" is selected and inputted.

Another application example of this embodiment will be described. FIG. 8B is a diagram of an example of applying a method for determining the inclination of the object O to joystick input. As shown in FIG. 8B, a circle S is displayed in the projection region A. When the object O is placed on the display region of this circle S, the object O can function as a virtual joy stick. For example, if the object O is tilted to the left in FIG. 8B, a left input operation of a magnitude corresponding to the inclination $\theta x$ is selected and inputted. If the object O is tilted to the right in FIG. 8B, a right input operation of a magnitude corresponding to the inclination $\theta x$ is selected and inputted.

The projector 1 pertaining to the above aspect of this embodiment includes the LD 15 (e.g., the light source), a laser beam scanner (such as the MEMS mirror 18, the actuator 19, and the mirror servo 20), the photodetector 22, and the inclination determination component 122. The LD 15 emits a laser beam. The laser beam scanner line-scans a plurality of laser beams in the line scanning direction (the x direction). The lines of the laser beam are projected into the projection region A on the projection surface F. The photodetector 22 detects the reflected light r of the scanned laser beam R reflected by the object O located above the projection region A. The inclination determination component 122 determines the inclination $\theta x$ of the object O with respect to the projection surface F in the line scanning direction (the x direction) of the scanned laser beam R based on the amount of change (e.g., change amount) in the timing (such as ta, tb, tc, tr, etc.) at which the photodetector 22 detects the reflected light r.

With this projector 1, the laser beams that has been scanned for a plurality of lines by the laser beam scanner (such as the reflecting mirror 21, the actuator 19, and the mirror servo 20) are projected into the projection region A on the projection surface F, and are reflected by the object O located above the projection region A. The inclination determination component 122 determines the inclination $\theta x$ of the object O with respect to the projection surface F in the line scanning direction (the x direction) of the scanned laser beam R based on the amount of change in the timing (such as ta, tb, tc, tr, etc.) at which the reflected light r is detected by the photodetector 22. Therefore, a virtual input interface can be realized with which the inclination $\theta x$ of the object O located above the projection region A in the line scanning direction (the x direction) of the scanned laser beam R can be detected.

Also, with the projector 1 pertaining to an aspect of this embodiment, the inclination determination component 122 determines the inclination $\theta x$ of the object O with respect to the projection surface F in the line scanning direction (the x direction) based on the amount of change (ta - tb) between the timing ta (e.g., the first timing) and the timing tb (e.g., the second timing), for example. What is detected at the timing ta is the reflected light rn (e.g., the first reflected light) obtained in response to the scanned laser beam Rn (e.g., the first laser beam) of the n-th line scanned by the laser beam scanner (such as the reflecting mirror 21, the actuator 19, and the mirror servo 20) being reflected by the object O. What is detected at the timing tb is the reflected light rn+1 (e.g., the second reflected light) obtained in response to the scanned laser beam Rn+1 (e.g., the second laser beam) of the (n+1)-th line scanned after the scanned laser beam Rn of the n-th line being reflected by the object O.

This allows the inclination $\theta x$ of the object O with respect to the projection surface F in the line scanning direction (the x direction) to be detected based on the amount of change (tb - ta) in the timings ta and tb. The reflected light rn and m+1 of the scanned laser beams Rn and Rn+1 of the n-th and the (n+1)-th lines reflected by the object O are detected at the timings ta and tb.

With the projector 1, the reflected lights rn and rn+1 (e.g., the first and second reflected lights) are obtained in response to the scanned laser beams Rn and Rn+1 (e.g., the first and second laser beams) being reflected on different points Pn and Pn+1 of the object O, respectively.

With the projector 1, the amount of change (tb - ta) (e.g., the change amount) between the timings ta and tb (e.g., the first and second timings) is calculated by subtracting the timing ta (e.g., the first timing) from the timing tb (e.g., the second timing).

With the projector 1, the inclination determination component 122 further calculates the timings ta and tb (e.g., the first and second timings) relative to the points or timings t0 (e.g., the line-scan start timings) of the scanned laser beams Rn and Rn+1 (e.g., the first and second laser beams), respectively.

Also, with the projector 1 pertaining to an aspect of this embodiment, the inclination determination component 122 determines a plurality of amounts of change (e.g., change amounts) (such as (tb - ta), (tc - tb), etc.) for the timing (such as ta, tb, tc, tr, etc.) at which the reflected light r from the object O is detected. The inclination determination component 122 further determines the inclination $\theta x$ of the object O with respect to the projection surface F in the line scanning direction (the x direction) based on the plurality of amounts of change.

This allows the inclination $\theta x$ of the object O with respect to the projection surface F in the line scanning direction (the x direction) to be calculated more accurately.

Also, in an aspect of this embodiment, the projector 1 is an input device having a VUI function.

This allows the projector 1 having a VUI (virtual user interface) function to be used as an input device.

Also, the method for inputting the inclination $\theta x$ of the object O in an aspect of this embodiment includes the following steps. First, a laser beam is emitted, and a plurality of lines of the laser beam projected in the projection region A on the projection surface F are scanned in the line scanning direction (the x direction). The reflected light r of the scanned laser beam R reflected by the object O located above the projection region A is detected. The inclination $\theta x$ of the object O with respect to the projection surface F in the line scanning direction (the x direction) of the scanned laser beam R is determined based on the amount of change in the timing (such as ta, tb, tc, etc.) at which the reflected light r is detected.

With this input method, the laser beam that is scanned for a plurality of lines is projected into the projection region A on the projection surface F, and reflected by the object O located above the projection region A. The inclination $\theta x$ of the object O with respect to the projection surface F in the line scanning direction (the x direction) of the scanned laser beam R is determined based on the amount of change in the timing (such as ta, tb, tc, tr, etc.) at which each reflected light r is detected. Therefore, a virtual input interface can be obtained with which the inclination $\theta x$ of the object O located above the projection region A in the line scanning direction (the x direction) of the scanned laser beam R can be detected.

An embodiment of the present invention is described above. The above embodiment is merely an example, and various modifications in the combination of the constituent elements and processing steps are possible, and it will be understood by a person skilled in the art that this lies within the scope of the present invention.

For example, in the above embodiment, the position determination component 121 and the inclination determination component 122 are realized as functional components of the CPU 12. However, the present invention is not limited to or by this example. The position determination component 121 and the inclination determination component 122 can each be realized by an electronic circuit component that is separate from the CPU 12.

Also, in the above embodiment, the projector 1 includes the reflecting mirror 21. However, the present invention is not limited to or by this example. The projector 1 need not include the reflecting mirror 21. In this case, the scanned laser beam R emitted from the light emission face 10a will be projected directly onto the projection surface F.

Also, in the above embodiment, the inclination $\theta x$ of the object O is determined based on the reflected light r (such as the reflected light rn and rn+1) of two scanned laser beams R line-scanned consecutively. However, the present invention is not limited to or by this example. The inclination $\theta x$ can be determined based on the reflected light r of the scanned laser beam R for a given line, and the reflected light r of the scanned laser beam R a plurality of lines later. For instance, the inclination $\theta x$ of the object O in the line scanning direction (the x direction) can be determined by using the above-mentioned Equation 1, based on the deviation (tc - ta) in the detection timing in light detection signals for the reflected light rn and rn+2 of the n-th and the (n+2)-th lines. In this case, it should go without saying that the spacing 2m of the reflection starting points Pn and Pn+2 and the line scanning distance $L_{n+2}$ of the scanned laser beam Rn+2 of the (n+2)-th line are used in Equation 1. This allows the inclination $\theta x$ of the object O with respect to the projection surface F in the line scanning direction (the x direction) to be calculated more accurately by using Equation 1.

Also, in the above embodiment, the LD 15 emits a laser beam with a wavelength in the visible light band. However, the present invention is not limited to or by this example. The LD 15 can instead emit a laser beam with a wavelength outside the visible light band (such as infrared light or ultraviolet light).

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of an input device or projector in an upright position. Accordingly, these directional terms, as utilized to describe the input device should be interpreted relative to an input device in an upright position on a horizontal surface.

Also it will be understood that although the terms "first" and "second" may be used herein to describe various components these components should not be limited by these terms. These terms are only used to distinguish one component from another. Thus, for example, a first component discussed above could be termed a second component and vice-a-versa without departing from the teachings of the present invention. The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only a selected embodiment has been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiment according to the present invention are provided for illustration only, and not for the purpose of limiting the invention as defined by the appended claims and their equivalents.

**Claims**

1. An input device comprising:

   a light source configured to emit a laser beam;
   a laser beam scanner configured to scan a plurality of lines of the laser beam in a line scanning direction, the lines of the laser beam being projected in a projection region of a projection surface;
   a photodetector configured to detect a reflected light of the laser beam reflected by an object located above the projection region; and
   an inclination determination component configured to determine an inclination of the object with respect to the projection surface in the line scanning direction based on a change amount in a timing at which the photodetector detects the reflected light.

2. The input device according to claim 1, wherein
   the inclination determination component is configured to determine the inclination of the object with respect to the projection surface in the line scanning direction based on the change amount between first and second timings at which first and second reflected lights are detected, respectively, the first reflected light being obtained in response to a first laser beam line-scanned by the laser beam scanner being reflected by the object, the second reflected light being obtained in response to a second laser beam line-scanned after the first laser beam being reflected by the object.

3. The input device according to claim 2, wherein
the first and second reflected lights are obtained in response to the first and second laser beams being reflected on different points of the object, respectively.

4. The input device according to claim 2 or 3, wherein
the change amount between the first and second timings is calculated by subtracting the first timing from the second timing.

5. The input device according to claim 2, 3 or 4, wherein
the inclination determination component is further configured to calculate the first and second timings relative to line-scan start timings of the first and second laser beams, respectively.

6. The input device according to any one of claims 1 to 5, wherein
the inclination determination component is configured to determine a plurality of change amounts in the timing at which the reflected light from the object is detected, the inclination determination component being further configured to determine the inclination of the object with respect to the projection surface in the line scanning direction based on the change amounts.

7. The electronic device according to any one of claims 1 to 6, further comprising
a projecting mirror configured to reflect over the projection surface the laser beam that has been outputted from the laser beam scanner away from the projection surface.

8. A projection device having a virtual user interface function, the projection device comprising the input device according to any one of claims 1 to 7.

9. An input method comprising:

   emitting a laser beam;
   scanning a plurality of lines of the laser beam in a line scanning direction, the lines of the laser beam being projected in a projection region on a projection surface;
   detecting a reflected light of the laser beam reflected by an object located above the projection region; and
   determining an inclination of the object with respect to the projection surface in the line scanning direction based on a change amount in timings at which the reflected light is detected.

FIG. 1

FIG. 2

*FIG. 3*

*FIG. 4A*

*FIG. 4B*

FIG. 4C

FIG. 5

*FIG. 6A*

(n + 2)-th line of line scanning

(n + 1)-th line of line scanning

n-th line of line scanning

*FIG. 6B*

**FIG. 6C**

line scanning time T for one line

horizontal synchronization signal

light detection signal of n-th line

light detection signal of (n+1)-th line

light detection signal of (n+2)-th line

t0        tr

**FIG. 7**

FIG. 8A

FIG. 8B

**EP 2 787 419 A1**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 570 891 A1 (FUNAI ELECTRIC CO [JP]) 20 March 2013 (2013-03-20) * paragraph [0006] * * paragraph [0015] - paragraph [0016] * * paragraph [0028] - paragraph [0029] * * paragraph [0036] - paragraph [0037] * * paragraph [0047] - paragraph [0050] * * paragraph [0054] * * figures 3, 6, 7 * | 1-9 | INV. G06F3/042 |
| X | YOSHIKI TAKEOKA ET AL: "Ztouch: An Infrastructure for 3D gesture interaction in the proximity of tabletop surfaces", PROC. OF ITS 2010: DISPLAYS, SAARBRÜCKEN, GERMANY, 7 November 2010 (2010-11-07), pages 91-94, XP007921456, ISBN: 978-1-4503-0399-6 | 1-5,9 | |
| A | * the whole document * | 6-8 | |

TECHNICAL FIELDS SEARCHED (IPC)

G06F

The present search report has been drawn up for all claims

| Place of search | Date of completion of the search | Examiner |
|---|---|---|
| Munich | 9 July 2014 | Bedarida, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 16 2046

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2014

| Patent document cited in search report | Publication date | Patent family member(s) | | Publication date |
|---|---|---|---|---|
| EP 2570891 A1 | 20-03-2013 | EP | 2570891 A1 | 20-03-2013 |
| | | JP | 2013065061 A | 11-04-2013 |
| | | KR | 20130029740 A | 25-03-2013 |
| | | US | 2013070232 A1 | 21-03-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013077909 A

- JP 2009258569 A